# EUROPEAN PATENT APPLICATION

(11) **EP 4 679 154 A1**
(43) Date of publication of application: **14.01.2026**
(21) Application number: 23934168.8
(22) Date of filing: 20.04.2023
(51) Int. Cl.: G02B 6/44, G02B 6/38

(54) **WATERPROOF PUSH-PULL CLOSURE HAVING FUNCTION OF EASILY LOCKING AND UNLOCKING FIBER OPTIC CONNECTOR**

(71) Applicant: UCL Trading Co., Ltd., Daejeon 34015 (KR); UCLSwift Co.,Ltd., Daejeon 34015 (KR)
(72) Inventor: JUN, Kun-Ik, Hamyang-gun Gyeongsangnam-do 50003 (KR); AHN, Sung-Kook, Suwon-si Gyeonggi-do 16401 (KR)
(74) Representative: BCKIP Part mbB
(86) International application number: PCT/KR2023/005362
(87) International publication number: WO 2024/219519

(57) **Abstract**

The present invention relates to a waterproof push-pull closure having a function of easily locking and unlocking a fiber optic connector, the closure enabling attachment/detachment on the outer periphery of an object to be provided, enabling waterproofing through a sealed structure, and fixing/releasing the fiber optic connector to/from the inside of the closure merely through forward and backward operations when the fiber optic connector insertion-coupled to the inside of the closure is inserted, thereby facilitating use.

## Description

### Technical Field

The present invention relates to a waterproof push-pull closure having a structure enabling attachment/detachment on an object, enabling waterproofing through a sealed structure, and fixing/releasing (locking/unlocking) the fiber optic connector to/from the inside of the closure merely through forward and backward operations when the fiber optic connector is inserted.

### Background Art

Optical cable closures are sealed containers for protecting a fusion splicing unit or a branching unit of an optical fiber.

The optical cable closures are usually installed on utility poles and at locations where optical cables branch, and has some of the optical cables to be branched and mounted therein and the optical cables to be branched to multiple destinations where the optical cables are used.

However, these existing closures usually have a configuration in which, in order to ensure that a fiber optic connector is inserted and mounted in the closure and does not slip out to the outside, the fiber optic connector can be fixed to a device by fastening a screw as an additional fixing means for fixing the fiber optic connector to the closure around an insertion hole in which the fiber optic connector is fitted.

Such a structure indicates that an operator needs to perform an additional laborious task whenever the fiber optic connector is mounted and dismounted, and has problems of not only increasing overall costs of equipment but also complicating an internal structure.

In this respect, there is an urgent demand for developing a device that enables a fiber optic connector to be easily and simply inserted and mounted and dismounted from outside the closure without using such an additional fixing means or device.

### [Citation List]

### [Patent Literature]

US Patent Publication US2020/0218017 A1 (Jul, 9, 2020)

### Summary of Invention

### Technical Problem

The present invention is made to solve the problems described above, and an object of the present invention is to provide a waterproof push-pull closure having a function of easily locking and unlocking a fiber optic connector, enabling attachment/detachment by being hooked or suspended from an object in various shapes, facilitating waterproofing through a sealed structure, and having an internal configuration in which the fiber optic connector mounted in the closure can be fixed/released to/from the inside of the closure merely through forward and backward operations when the fiber optic connector is inserted to the insertion hole, and the push-pull closure is easily and simply used without using an additional fixing means.

Other objects and advantages of the present invention will be described below and understood with reference to an embodiment of the present invention. In addition, the objects and advantages of the present invention can be realized by means and combinations represented in claims.

### Solution to Problem

The present invention, as a means to solve the above problems,
includes:
a closure (300) capable of being detachably installed on an object to which an optic cable (C) is installed and having a sealed structure to enable waterproofing;
a fiber optic connector (100) which is selectively insertion-coupled to any one of multiple insertion holes (307) formed in the closure (300) and in which a single optical cable (C) within the closure (300) branches into multiple lines to be used multiple use destinations;
a fiber optic connector locking device (200) which is correspondingly installed to a bottom surface of each of the insertion holes (307) in the closure (300) and enables the fiber optic connector (100) to be mounted in and dismounted from the closure (300) by being installed to be lifted and lowered by forward and backward operation of the fiber optic connector (100) to be mounted; and
optical adaptors (310) that are installed at each rear end of the insertion holes (307) in the closure (300) and individually connected to the fiber optic connector (100).

### Advantageous Effects of Invention

As described above, the closure of the present invention is effective in that the closure can be attached/detached to/from the exterior of an object and is a sealed structure to enable waterproofing.

In addition, according to the present invention, the fiber optic connector that is inserted into the closure is effective in easy and convenient use by having a structure that enables fixing/releasing in the closure merely through forward and backward operation of inserting into the insertion hole without an additional device.

### Brief Description of Drawings

FIG. 1 is a view of a first embodiment illustrating a fixing structure of a closure according to the present invention;
FIG. 2 is a view of a second embodiment illustrating a fixing structure of the closure according to the present invention;
Fig. 3 is a view of an embodiment illustrating an internal configuration of the closure according to the present invention;
Fig. 4 is a cross-sectional view illustrating the closure according to the present invention;
FIG. 5 and FIG. 6 are views of the embodiment illustrating operation of fixing and releasing a fiber optic connector according to the present invention in accordance with forward and backward operation of the fiber optic connector.
FIG. 7 and FIG. 8 are views of the embodiment illustrating the fiber optic connector with waterproof and latching function according to the present invention;
FIG. 9 is a view of the embodiment illustrating the connection between the fiber optic connector and an optical adaptor according to the present invention;
FIG. 10 is a view of the embodiment illustrating a shape of the inserted and mounted fiber optic connector according to the present invention;
FIG. 11 is a view of the embodiment illustrating a housing according to the present invention;
FIG. 12 is a view of the embodiment illustrating a plunger according to the present invention;
FIG. 13 is a view of the embodiment illustrating a stick according to the present invention;
FIG. 14 and FIG. 15 are views of the embodiment illustrating a coupling relationship between the housing, the plunger, and the stick according to the present invention.
FIG. 16 is a view of the embodiment illustrating movement paths of the plunger and a fitting protrusion in a heart-cam according to the present invention; and
FIG. 17 is a view of the embodiment illustrating a coupling position of the fiber optic connector and a latching portion with respect to a stop position of the heart-cam of the fitting protrusion according to the present invention.

### <Reference Signs List>

10: Housing, 11: Vertical installation space
12: Opening hole, 13: Opening
20: Elastic member, 30: Plunger
31: Seating groove, 32: Insertion surface
33: Latching step, 34: Latching portion
40: Heart-cam, 41: Recessed portion
50: Stick, 51: Horizontal stick
52: Vertical stick, 53: Fitting protrusion
100: Fiber optic connector, 110: Connector main body
113: Ferrule, 114: Plug
115: Hook, 116: Cover portion
117: Boot, 118: Protrusion
120: Sealing member, 121: Seating groove
130: Insertion groove, 131: First diameter portion
132: Second diameter portion, 133: Inclined surface
134: First step, 200: Fiber optic connector locking device
300: Closure, 301a: Main body
301b: Cover, 302: Fixing body
303: Gasket, 304: Cable cover
305: Safety bar, 306: Dust cap
307: Insertion hole, 310: Optical adaptor
311: Adaptor, 312: Extended portion
313: Connect pin, 314: Elastic body
320: Adaptor cover, 321: Groove portion
A: Upper end point, B: Lower end point
H: Hole

### Description of Embodiments

Before various embodiments of the present invention are described in detail, it will be known that application thereof is not limited to details of configurations and arrangements of components to be described in the following detailed description or illustrated in the drawings. The present invention can be realized and implemented into other embodiments and can be carried out in various methods. Also, it will be known that expressions and predicates used herein with respect to terms such as a device or an element orientation (for example, "front", "back", "up", "down", "top", "bottom", "left", "right", or "lateral") are used only to simplify the description of the present invention and do not indicate or mean that the device or an element involved should simply have a particular orientation. In addition, terms such as "first" and "second" are used herein and in the accompanying claims for illustrative description and are not intended to indicate or mean relative significance or meaning between the terms.

The present invention has the following features to achieve the above-described object.

Hereinafter, a preferred embodiment of the present invention will be described in detail with reference to the accompanying drawings. Before the detailed description, terms or words used in this specification and claims are not construed as limited meanings of the common or dictionary meanings but have to be construed as meanings and concepts in accordance with technical ideas of the present invention based on the principle that an inventor can define a concept of a term in order to describe his or her invention in the best way, as appropriate.

Hence, since the embodiments described in this specification and configurations illustrated in the drawings are provided only as most preferred embodiments of the present invention and do not represent all of the technical ideas of the present invention, it should be understood that there can be various equivalents and modification examples which can substitute for the embodiments and the configurations of the present invention at the time of this application.

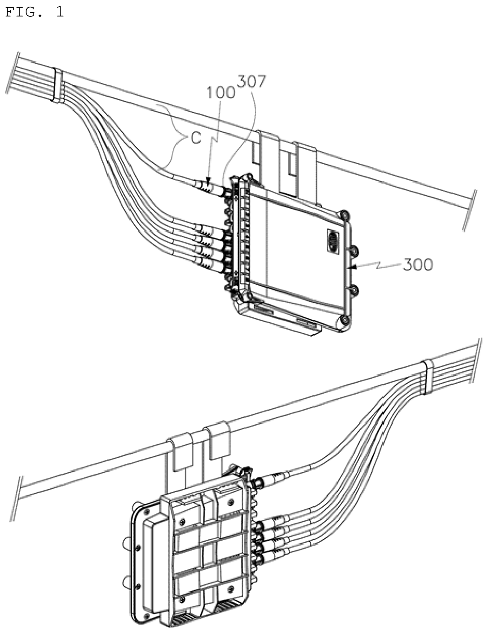

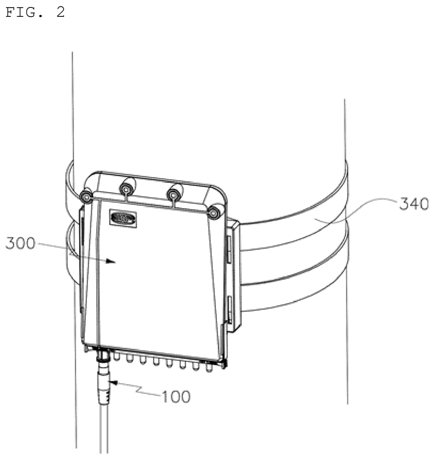

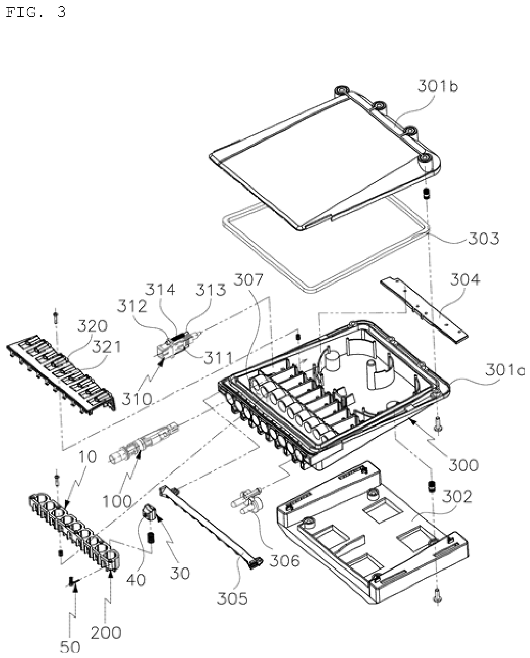

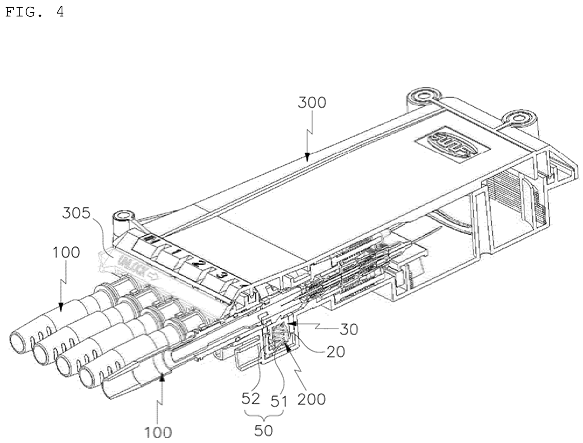

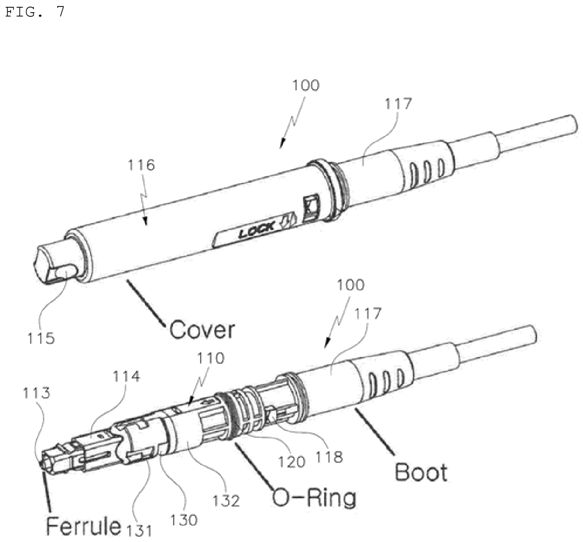

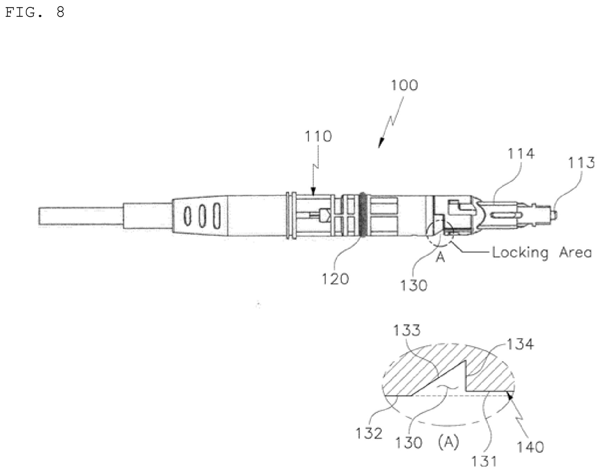

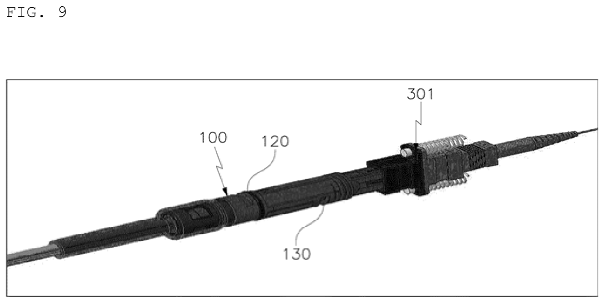

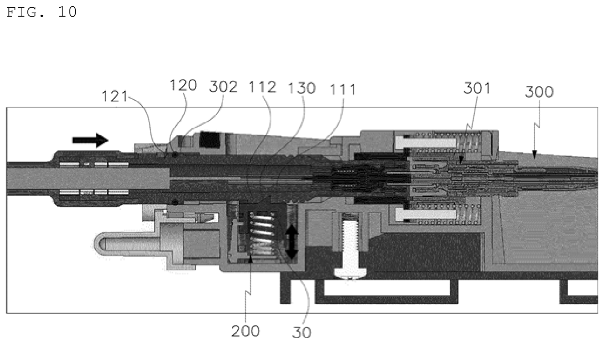

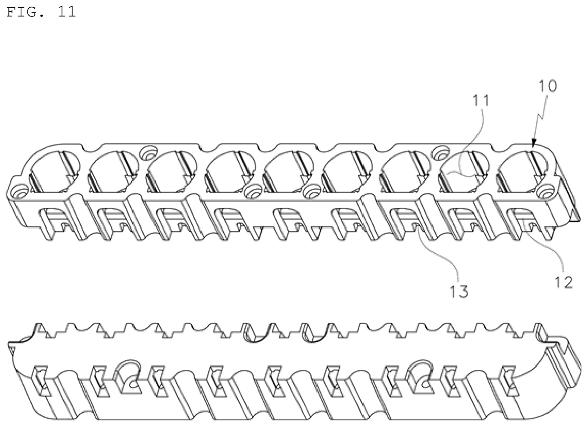

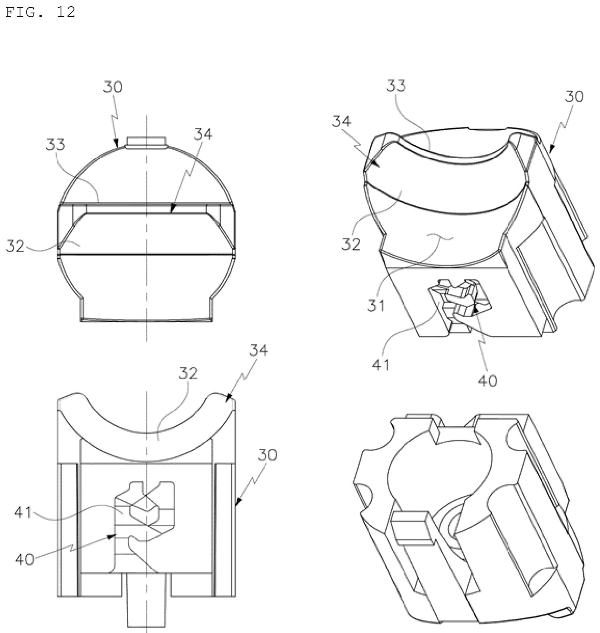

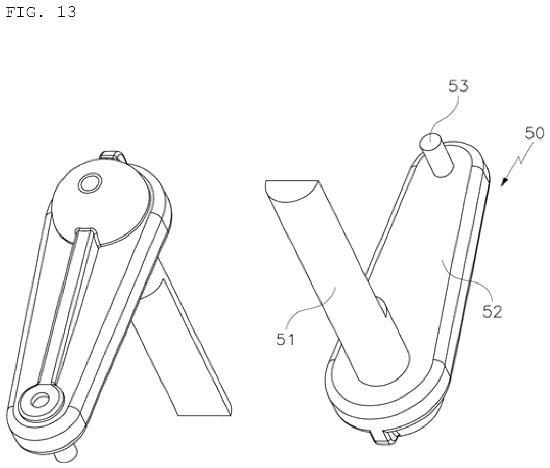

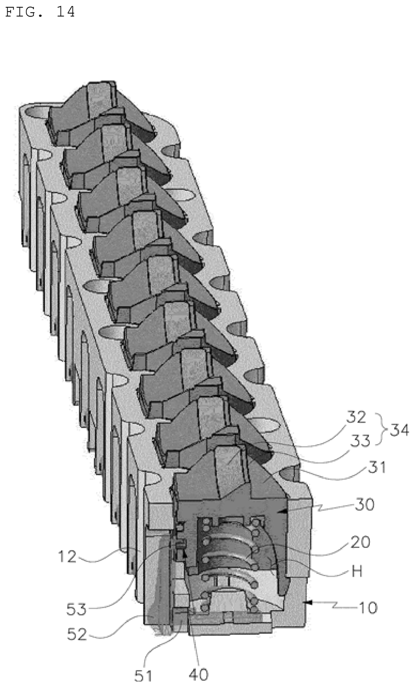

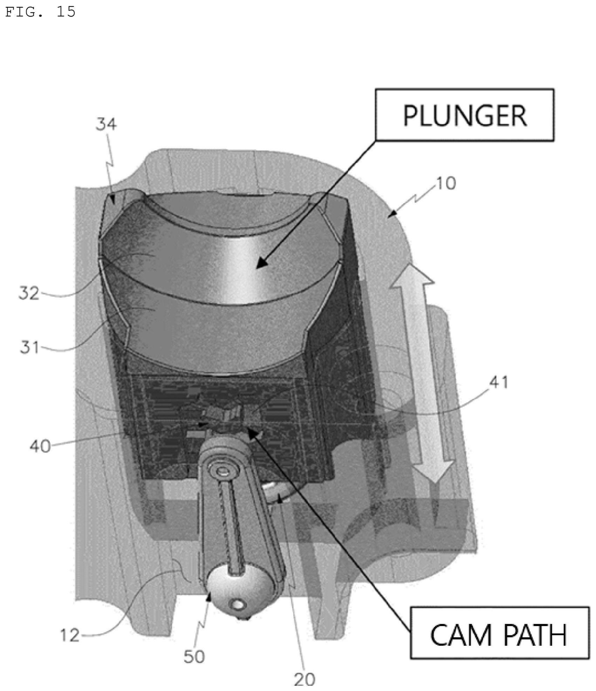

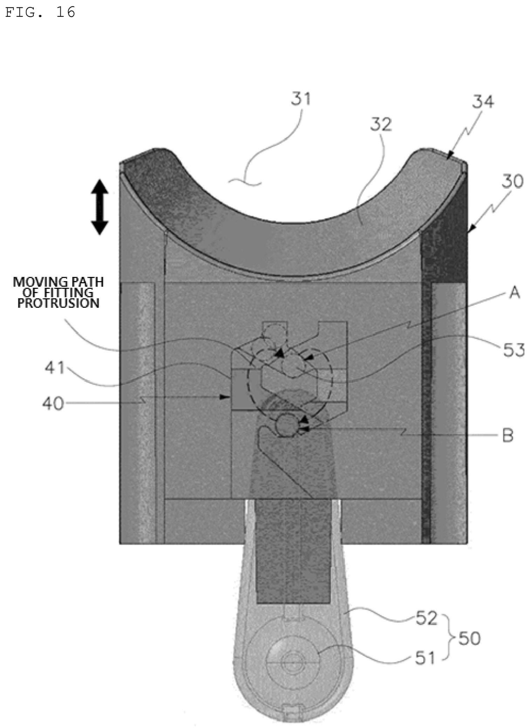

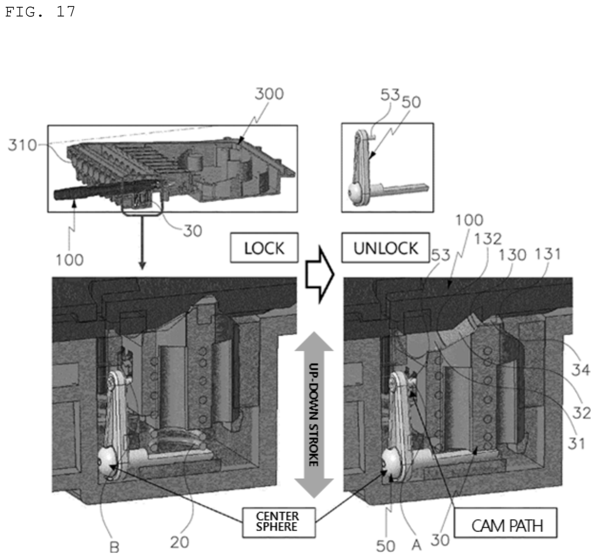

Hereinafter, with reference to FIGS. 1 to 17, a waterproof push-pull closure (300) having a function of easily locking and unlocking a fiber optic connector according to a preferred embodiment of the present invention will be described in detail.

For the purposes of this invention, the waterproof push-pull closure (300) having a function of easily locking and unlocking a fiber optic connector includes a closure (300), a fiber optic connector (100), a fiber optic connector locking device (200), and an optical adaptor (310).

The closure (300) can be detachably installed on an object to which an optical cable C is installed. A single fiber optic connector (100) can be inserted and mounted in the closure (300) through an insertion hole (307) and then branched into multiple ports inside the closure (300) to be distributed to multiple use destinations (such as homes), and the closure (300) is structured to be entirely sealed to have a waterproof effect from the outside.

When the closure (300) is installed on an optical cable of an utility pole, the closure (300) can be installed using a hook-shaped first fixing portion (330) which enables the closure (300) to be installed by being hung from a main optical cable C, and when installed on a utility pole, the closure can be installed using a band-shaped second fixing portion (340) which enables the closure (300) to be hung while surrounding an object in accordance to an outer periphery.

In addition, for the closure (300) for this purpose, a gasket (303) is used to fasten a main body (301a) and a cover (301b) that constitute the closure (300) in order to seal the closure (300), or the closure can be integrated and manufactured by the overmolding method after installing a component in the main body (301a) of the closure (300).

The fiber optic connector (100) is configured to be selectively insertion-coupled to any one of multiple insertion holes (307) formed in the closure (300) and make the single optical cable (C) branch into multiple lines so that the single optical cable (C) within the closure (300) can be used at multiple use destinations.

The fiber optic connector (100) includes a connector main body (110), a sealing member (120), an insertion groove (130), a stepped portion (140), and dust cover (116).

The connector main body (110) is installed outside of a device such as the closure (300) (branching device) described above, and the connector main body (110) is inserted into an insertion hole (307) in the closure (300) and connected to an optical adaptor

(310) inside the closure (300). In this respect, the connector main body (110) has a plug (114) formed at one end thereof and a ferrule (113), in which an optical fiber is arranged, formed at a center of the one end, and includes a boot (117) which protects an outer periphery formed from a middle portion to a rear end thereof.

In addition, the fiber optic connector (100) further includes, on an outer periphery at one end thereof, the dust cover (116) that is mounted in a longitudinal direction in a detachable manner. The dust cover (116) has, at a terminal end on one side thereof, a hook (115) which is used for fixing a wire for laying cable and enables the sealing member (120), the insertion groove (130), and the stepped portion (140) to be protected from the outside, and the dust cover (116) is fastened to, in a bayonet shape, a protrusion (118) of the fiber optic connector main body (110).

The sealing member (120) is a rubber ring having elasticity and is fitted in a seating groove (121) after the seating groove (121) is formed in an outer periphery of a middle portion of the connector main body (110), thereby enabling a waterproof function of blocking water or moisture from infiltrating the insertion hole (307) into which the connector main body (110) is inserted to be fulfilled as an inside of the insertion hole (307) and an outer periphery of the sealing member (120) are in contact with each other.

The insertion groove (130) is a groove that is formed at an outer periphery between the plug (114) and the sealing member (120) in the connector main body (110) to be correspondingly latched and mounted to a fiber optic connector locking device (200) formed on an inner bottom surface of the insertion hole (307) to be fixed thereto.

The stepped portion (140) is a latching portion of the fiber optic connector locking device (200) which allows a height difference to be formed between a first diameter portion (131) and a second diameter portion (132) by forming the second diameter portion (132) of the connector main body (110) on a rear end side of the insertion groove (130) to be relatively larger than the first diameter portion (132) of the connector main body (110) on a front end side of the insertion groove (130).

In this respect, the fitting groove (130) has a first step (134) formed by being vertically recessed from the first diameter portion (131) and an inclined surface (133) having an oblique shape from the first step (134) to the second diameter portion (132) and having a diameter that gradually increases, thereby forming the triangular fitting groove (130). A plunger (30) formed on the fiber optic connector locking device (200) will be described below in detail when the fiber optic connector locking device (200) is described and prevents the connector main body (110) from being detached from the inside of the insertion hole (307) by having an upper surface formed in a shape corresponding to the insertion groove (130) and being correspondingly inserted to the insertion groove (130).

Preferentially, the fiber optic connector locking device (200) positioned inside the plunger (30) has a structure that repeats lifting and lowering in which the plunger (30) formed on an upper surface of the fiber optic connector locking device (200) is lifted when pressed once and lowered when pressed again. Since an internal configuration can be variously modified depending on a user's implementation example, the internal configuration for such operation is not limited to some configuration as long as the plunger (30) of the fiber optic connector locking device (200) has a structure to be lifted and lowered.

A coupling structure with the closure (300) with the fiber optic connector (100) according to such a configuration is described as follows.

The fiber optic connector (100) has a structure in which the fiber optic connector (100) is operated in a first case in which, in a state where the plunger (30) is initially pressed, the fiber optic connector (100) moves forward by being in contact with the upper surface of the plunger (30), is lifted by pressing the plunger (30) as the second diameter portion (132) is correspondingly positioned to the plunger (30), and then is maintained in the state of being positioned in the insertion hole (307) as the plunger (30) is correspondingly inserted to the insertion groove (130) by moving the fiber optic connector (100) backward, and

in a second case in which, while the fiber optic connector (100) is inserted to the insertion hole (307), the fiber optic connector (100) is lowered to the initial position by further moving forward the fiber optic connector (100) so that the second diameter portion (132) presses the plunger (30) again, such that the first and second diameter portions (131) and (132) of the fiber optic connector (100) are not caught at the plunger (30) and the fiber optic connector (100) is moved backward to detach the fiber optic connector (100) from the insertion hole (307).

The fiber optic connector locking device (200) is a locking means that is correspondingly installed to a bottom surface of each of the insertion holes (307) in the closure (300) and enables the fiber optic connector (100) to be mounted in and dismounted from the closure (300) by being installed to be lifted and lowered by forward and backward operation of the fiber optic connector (100) to be mounted.

The fiber optic connector locking device (200) for this purpose includes a housing (10), an elastic member (20), a plunger (30), a heart-cam (40), and a stick (50).

The housing (10) has a quadrangular container shape with a long length in one direction and is divided into multiple spaces in which multiple vertical installation spaces (11) are formed in a length direction. The housing (10) has an opening hole (12) which is open in front to communicate with an inside of the vertical installation spaces (11), and has an opening (13) at a lower end on the front side thereof.

The elastic member (20) is a spring which is mounted upright for each of the vertical installation spaces (11).

The plunger (30) is mounted upright in each of the vertical installation spaces (11) and has, at a center, a hole (H) into which the elastic member (20) is inserted and mounted at a center inside. The plunger is installed upright for each of the vertical installation spaces (11) in a state where a part of the elastic member (20) is inserted into the inside thereof, to have a structure in which lifting and lowering can be performed by the elastic member (20). That is, the plunger (30) has a structure that repeats lifting and lowering in which the plunger is lifted when pressed once and lowered when pressed again.

In addition, the plunger (30) forms the heart-cam (40) that is formed by being recessed in a heart shape in one surface (a front surface) positioned corresponding to the opening hole (12).

The recessed chape of the heart-cams (40) is in a 'C' shape on the left and in a reversed 'C' shape on the right to have a heart-like shape as a whole, and a fitting protrusion (53) of the stick (50) to be described below has a shape to be fitted in a recessed portion (41) of the heart-cam (40) and rotated in the clockwise direction along the recessed portion (41).

Additionally, the plunger (30) further has a seating groove (31) and a latching portion (34) in an upper surface thereof.

The seating groove (31) is formed by being recessed in the upper surface of the plunger (30) in a semicircular shape in a width direction of the housing (10) (a forward and backward direction of the fiber optic connector (100) (an insertion direction of the fiber optic connector 100)) and enables the connector to be horizontally fitted in the forward and backward direction, which is orthogonal to the length direction of the housing (10), as a lower side of the outer periphery of the fiber optic connector (100) having a circular cross section is in corresponding contact with the seating groove (31).

The latching portion (34) is formed by projecting in a semicircular shape in a left-right direction, which is orthogonal to the forward and backward direction of the fiber optic connector (100), at a middle portion of the seating groove (31). The latching portion (34) has, at a front surface, an insertion surface (32) which is obliquely inclined and has, at a rear surface, a latching step (33) which forms a right angle with the seating groove (31).

The stick (50) has one end that is fitted in the opening (13) of the housing (10) on the front side and the other end having the fitting protrusion (53) which is fitted in the heart-cam (40). The stick (50) is used to fix the lifting position and the lowering position of the plunger (30) by performing repetitive operation by which the fitting protrusion (53) is alternately fixed to an upper end point A and a lower end point B of the heart-cam (40) as the fitting protrusion (53) is moved in the clockwise direction along the recessed portion (41) of the heart-cam (40) whenever the plunger (30) is pressed.

The stick (50) for this purpose includes a horizontal stick (51), a vertical stick (52), and the fitting protrusion (53).

The horizontal stick (51) has a structure in which the horizontal stick is fitted in the opening (13) to be pivotable to the left and the right on an inner bottom surface of the vertical installation space (11). The horizontal stick can be fitted in an oblique shape in the vertical installation space (11) since the horizontal stick can be detached to the outside when being horizontally fitted. The vertical stick (52) extends upright from one end of the horizontal stick (51) toward the opening hole (12) and has an 'L' shape cross-section together with the horizontal stick (53). The fitting protrusion (53) is a protrusion that is fitted corresponding to the heart-cam (40) from a terminal end of the vertical stick (52) and can be moved along the recessed portion (41) of the heart-cam (40).

Preferably, the shape of the fiber optic connector (100) which moves horizontally forward and backward by being in contact correspondingly with the upper surface of the plunger (30) is generally a circular cross-sectional structure and forms the insertion groove (130) formed in the outer periphery such that the latching portion (34) of the plunger (30) is correspondingly fitted to the insertion groove. The diameter of the outer periphery (the second diameter (132)) on the rear end side of the insertion groove (130) is set to be larger than the diameter of the periphery (the first diameter (131)) on the front end side which becomes an insertion start portion with respect to the insertion groove (130).

In addition, the fiber optic connector (100) is horizontally correspondingly mounted to the closure (300) having the separate insertion hole (307) into which the fiber optic connector (100) is inserted, and the fiber optic connector locking device (200) of the present invention is installed and used at a position in the closure (300) which corresponds to the outer periphery of the fiber optic connector (100). Thus, as long as the outer periphery of the fiber optic connector (100) has a structure in which the outer periphery is inserted in a manner of being orthogonal to the plunger (30) on the fiber optic connector locking device (200) of the present invention, it is obvious that any closure (300) can be used without being limited to a type and a field, and another device can substitute for the closure and used.

In this respect, the fixing and releasing operation (the first and second cases) in the insertion hole (307) performed by the forward and backward operation of the fiber optic connector (100) with respect to the fiber optic connector locking device (200) is described as follows.

When the fiber optic connector (100) is moved forward while being in contact with the upper surface of the plunger (30) in a state where the fitting protrusion (53) is positioned at the upper end point A and the plunger (30) is pressed, the first diameter portion (131) of the fiber optic connector (100) horizontally passes over the upper surface of the plunger (30) as is, and then when the second diameter portion (132) of the fiber optic connector (100) reaches the position of the plunger (30), the plunger (30) is pressed with the second diameter portion (132) corresponding to the plunger (30).

The fitting protrusion (53) is rotated in a reverse C (O) shape and is moved to the lower end point B positioned at a center of the heart-cam (40) on the lower end side. Consequently, the plunger (30) is lifted by the restoration force of the compressed elastic member (20), and the latching portion (34) is positioned at a location higher than the upper surface of the housing (10).

Then, the fiber optic connector (100) is moved backward to the insertion groove (130) such that the insertion groove (130) of the outer periphery of the fiber optic connector (100) is fitted corresponding to the latching portion (34) and the latching portion (34) is correspondingly fitted to the insertion groove (130), thereby allowing the fiber optic connector (100) to be maintained in a state where the fiber optic connector (100) is fixed to the plunger (30) (the first case where the fiber optic connector (100) is mounted and fixed).

After the first case, in a case where the fiber optic connector (100) is to be detached, the second diameter portion (132) is made to press the plunger (30) again by causing the fiber optic connector (100) to move forward such that the second diameter portion (132) is positioned at the latching portion (34). Consequently, the fitting protrusion (53) is moved in the clockwise direction in the C shape and is moved to the upper end point A positioned at the center of the heart-cam (40) on the upper end side, thereby causing the plunger (30) to be lowered as the elastic member (20) is compressed again. When the plunger (30) is lowered, the latching portion (34) is flushed with the upper surface of the housing (10) or is positioned at a lower position, thus enabling the fiber optic connector (100) to move backward and be separated so that the fiber optic connector (100) is completely detached from the upper surface of the plunger (30) (the second case where the fiber optic connector (100) is dismounted and released).

In such a configuration, the optical adaptors (310) are installed for the rear ends of the insertion holes (307), respectively, in the closure (300) and are individually connected to the fiber optic connector (100).

The optical adaptor (310) for this purpose includes an adaptor (311), an adaptor cover (320), a connector pin (313), and the elastic body (314).

The adaptors (311) are horizontally arranged in respective installation grooves formed at the rear ends of the insertion holes (307), are installed to allow extension portions (312) projecting from both side surfaces to be arranged upward and downward, and have respective front ends to be connected to the fiber optical connector (100).

The adaptor cover (320) is correspondingly assembled to an upper portion in an installation groove and has a groove portion (321) so that the extension portions (312) are correspondingly positioned thereto.

The connector pin (313) has one end connected to the extension portions (312) in the groove portion (321), and has the other end fixed to the adaptor cover (320). The elastic body (314) is a component for which a spring or the like having an elastic force is used, is installed on an outer periphery of the connector pin (313) in the groove portion (321), and pushes the adaptor (311) toward the front side so that the adaptor is arranged at a position which is connected to the fiber optic connector (100) all the time.

Consequently, an operational relationship between the optical adaptor (310), the fiber optic connector (100), and the fiber optic connector locking device (200) is described as follows.

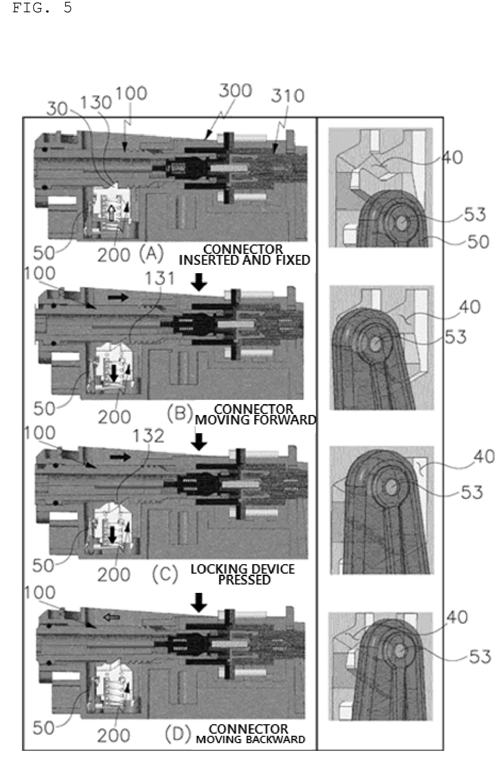

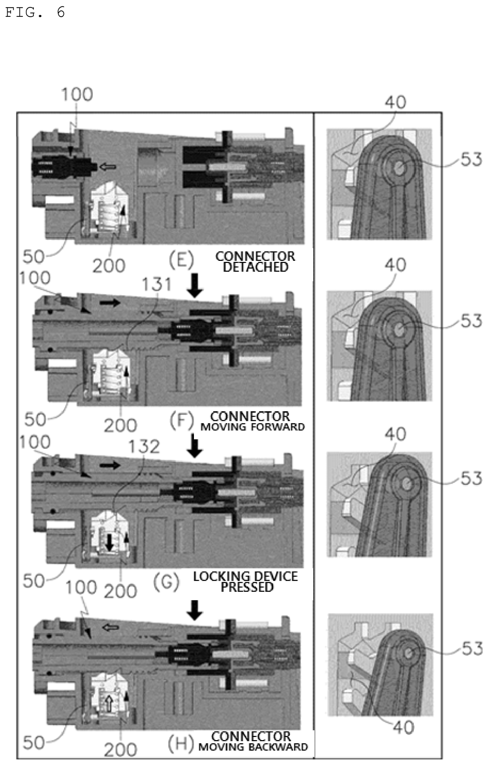

The fiber optic connector (100) has a structure in which the fiber optic connector (100) is operated in the first case in which, in the state where the plunger (30) is initially pressed ((E) of FIG. 6), the fiber optic connector (100) is inserted to the insertion hole (307) ((F) of FIG. 6) and moved forward by being in contact with the upper surface of the plunger (30) so that the elastic body (314) of the periphery of the optical adapter (310) connected to the fiber optic connector 100 is compressed and pushed rearward, and the second diameter portion (132) of the fiber optic connector (100) is correspondingly positioned to the plunger (30) to press the plunger (30) and lift the fiber optic connector ((G) of FIG. 6), and then the fiber optic connector (100) is maintained in the state of being positioned in each of the insertion holes (307) ((A) of FIG. 5) as the plunger (30) is correspondingly inserted to the insertion groove (130) by causing the optical adaptors (310) and the fiber optic connector (100) to move backward as the elastic body (314) is restored to an original state ((H) of FIG. 6), and

in a second case in which, in a state where the fiber optic connector (100) is inserted into each of the insertion holes (307) through the first case ((A) of FIG. 5), the fiber optic connector (100) is moved forward again toward the optical adaptors (310) in the insertion holes (307) so that the elastic body (314) of the periphery of the optical adaptors (310) connected to the fiber optic connector (100) is compressed and pushed rearward ((B) of FIG. 5) and the second diameter portion (132) of the fiber optic cable (100) presses the plunger (30) again to lower the plunger to the initial position ((C) of FIG. 5), thereby the first and second diameter portions (131) and (132) of the fiber optic connector (100) are not caught at the plunger (30) to move the fiber optic connector (100) backward and detach the fiber optic cable 100 from the insertion holes (307) ((D) of FIG. 5 and (E) of FIG. 6) (continuous repetition of operations (A) to (H) illustrated in FIGS. 5 and 6), so the fiber optic connector (100) and the plunger (30) are detachable from each other by lifting/lowering interlocking operation of the plunger (30) due to forward and backward operation of the fiber optic connector (100).

As described above, the present invention has been described with reference to the limited embodiments and drawings, and the present invention is not limited thereto. It should be understood that it is possible for a person with ordinary knowledge in the technical field to which the present invention pertains to variously modify and change the present invention within a range of equivalents of the technical ideas and the claims of the present invention to be described below.

## Claims

1. A waterproof push-pull closure (300) having a function of easily locking and unlocking a fiber optic connector, comprising:
a closure (300) capable of being detachably installed on an object to which an optic cable (C) is installed and having a sealed structure to enable waterproofing;
a fiber optic connector (100) which is selectively insertion-coupled to any one of multiple insertion holes (307) formed in the closure (300) and in which a single optical cable (C) within the closure (300) branches into multiple lines to be used multiple use destinations;
a fiber optic connector locking device (200) which is correspondingly installed to a bottom surface of each of the insertion holes (307) in the closure (300) and enables the fiber optic connector (100) to be mounted in and dismounted from the closure (300) by being installed to be lifted and lowered by forward and backward operation of the fiber optic connector (100) to be mounted; and
optical adaptors (310) that are installed at each rear end of the insertion holes (307) in the closure (300) and individually connected to the fiber optic connector (100).

2. The waterproof push-pull closure having a function of easily locking and unlocking a fiber optic connector according to claim 1,
wherein the optical adaptors (310) includes adaptors (311) that are horizontally arranged in respective installation grooves formed at the rear ends of the insertion holes (307), are installed to allow extension portions (312) projecting from both side surfaces to be arranged upward and downward, and have respective front ends connected to the fiber optic connector (100);
an adaptor cover (320) correspondingly assembled to an upper portion in the installation groove, and has a groove portion (321) so that the extension portions (312) are correspondingly positioned thereto;
a connection pin (313) that has one end connected to the extension portions (312) within the groove portion (321) and the other end fixed to the adaptor cover (320); and
an elastic body (314) that is installed on an outer periphery of the connection pin (313) in the groove portion 321 and pushes the adaptor (311) toward the front so that the adaptor (311) is arranged at a position at which the adaptor (311) is connected to the fiber optic connector (100) all the time.

3. The waterproof push-pull closure having a function of easily locking and unlocking a fiber optic connector according to claim 1,
wherein the fiber optic connector (100) includes
a connector main body (110) having a plug (114) formed at one end of the connector main body and a ferrule (113), in which an optical fiber is arranged, formed at a center of the one end so that the connector main body is fitted to an insertion hole (307) of the closure (300) and connected to an optical adaptor (310) inside the closure;
a sealing member (120) enabling a waterproof function to be fulfilled as an outer periphery is in contact with an inside of the insertion hole (307) by forming the seating groove (121) in an outer periphery of a middle portion of the connector main body (110);
an insertion groove (130) formed in an outer periphery between the plug (114) and the sealing member (120) to be correspondingly latched and mounted to a locking device (200) formed on an inner bottom surface of the insertion hole (307) to be fixed thereto.

4. The waterproof push-pull closure having a function of easily locking and unlocking a fiber optic connector according to claim 3, wherein
the insertion groove (130) has a first step (134) formed by being vertically recessed from a first diameter portion (131), and an inclined surface (133) having an oblique shape from the first step (134) to a second diameter portion (132) and having a diameter that gradually increases, and
a plunger (30) formed on the locking device (200) prevents the connector main body (110) from being detached from the inside of the insertion hole (307) by having an upper surface formed in a shape corresponding to the insertion groove (130) and being correspondingly inserted to the insertion groove (130).

5. The waterproof push-pull closure having a function of easily locking and unlocking a fiber optic connector according to claim 3, further comprising:
a dust cover (116) having, at a terminal end on one side, a hook (115) to pull the fiber optic connector (100), the dust cover being detachably mounted on an outer periphery of one end of the fiber optic connector (100) in a longitudinal direction and protecting the sealing member (120), the fitting groove (130), and a step portion (140) from the outside.

6. The waterproof push-pull closure having a function of easily locking and unlocking a fiber optic connector according to claim 1,
wherein the fiber optic connector locking device (200) has a housing (10) in which multiple vertical installation spaces (11) are formed in the longitudinal direction, and each of the vertical installation space 11 forms an opening hole 12 on a front side, and an opening (13) is bored at a front lower end;
an elastic member (20) installed at each of the vertical installation spaces (11) (20),
a plunger (30) that is installed upright at each of the vertical installation spaces (11) in a state where the elastic member (20) is inserted and mounted in an inner center, and has a structure enabling lifting and lowering to be performed by the elastic member (20),
a heart-cam (40) formed by recessing in a heart shape in one surface of the plunger (30) correspondingly positioned to the opening hole 12, and
a stick (50) having one end that is fitted in the opening (13) and the other end having a fitting protrusion (53) which is fitted in the heart-cam 40, and causes a lifted position and a lowered position of the plunger (30) to be fixed by performing repetitive operation by which the fitting protrusion (53) is alternately fixed to an upper end point (A) and a lower end point (B) of the heart-cam (40) as the fitting protrusion (53) is moved in the clockwise direction along the a recessed portion (41) of the heart-cam (40) whenever the plunger (30) is pressed.

7. The waterproof push-pull closure having a function of easily locking and unlocking a fiber optic connector according to claim 6,
wherein the stick (50) includes a horizontal stick (51) that is horizontally fitted in the opening (13),
a vertical stick (52) extending upright toward the opening hole 12 from one end of the horizontal stick (51), and
a fitting protrusion (53) that is fitted corresponding to the heart-cam (40) at a terminal end of the vertical stick (52) and is moved along the recessed portion (41) of the heart-cam (40).

8. The waterproof push-pull closure having a function of easily locking and unlocking a fiber optic connector according to claim 6,
wherein the plunger (30) includes
a seating groove (31) which is formed by recessing in a semicircle shape in the upper surface of the plunger (30) and in which the fiber optic connector (100) is horizontally fitted in the forward and backward direction, which is orthogonal to a length direction of the housing (10), and
a latching portion (34) that projects in a semi-circular shape at a middle portion of the seating groove (31), has a front surface forming an obliquely inclined insertion surface (32) and a rear surface forming a latching step 33 forming a right angle with the seating groove (31).

9. The waterproof push-pull closure having a function of easily locking and unlocking a fiber optic connector according to claim 8, wherein
the fiber optic connector (100) forms the insertion groove (130) formed in an outer circumferential edge to which the latching portion (34) is fitted corresponding thereto, and
the second diameter portion (132) on a rear end side of the fitting groove (130) is larger than the first diameter portion (131) of the fitting groove (130) on a front end side.

10. The waterproof push-pull closure having a function of easily locking and unlocking a fiber optic connector according to claim 1,
wherein the fiber optic connector (100) has a structure in which a plunger (30) formed on the fiber optic connector locking device (200) has a button shape and has a structure in which lifting and lowering movement is repeated,
the fiber optic connector (100) is operated in a first case in which the fiber optic connector (100) is operated in the first case in which, in the state where the plunger (30) is initially pressed, the fiber optic connector (100) is inserted to the insertion hole (307) and moved forward by being in contact with the upper surface of the plunger (30) so that the elastic body (314) of the periphery of the optical adapter (310) connected to the fiber optic connector (100) is compressed and pushed rearward, and the second diameter portion (132) of the fiber optic connector (100) is correspondingly positioned to the plunger (30) to press the plunger (30) and lift the fiber optic connector, and then the fiber optic connector (100) is maintained in the state of being positioned in each of the insertion holes (307) as the plunger (30) is correspondingly inserted to the insertion groove (130) by causing the optical adaptors (310) and the fiber optic connector (100) to move backward as the elastic body (314) is restored to an original state, and
in a second case in which, while the fiber optic connector (100) is inserted to the insertion hole (307), the fiber optic connector (100) is lowered to the initial position by further moving forward the fiber optic connector (100) so that the second diameter portion (132) presses the plunger (30) again, such that the first and second diameter portions (131 and 132) of the fiber optic connector (100) are not caught at the plunger (30) and the fiber optic connector (100) is moved backward to detach the fiber optic connector (100) from the insertion hole (307), and
the fiber optic connector (100) and the plunger (30) are detachable from each other by lifting/lowering interlocking operation of the plunger (30) due to forward and backward operation of the fiber optic connector (100).

11. The waterproof push-pull closure having a function of easily locking and unlocking a fiber optic connector according to claim 1,
wherein a gasket (303) is used to fasten a main body (301a) and a cover (301b) constituting the closure (300) in order to seal the closure (300).

12. The waterproof push-pull closure having a function of easily locking and unlocking a fiber optic connector according to claim 1,
wherein a component is installed inside a main body (301a) of the closure (300), and then integrated by an overmolding method.
